Europäisches Patentamt

European Patent Office

Office européen des brevets

(19)

(11) Numéro de publication: **0 294 274 B1**

(12) **FASCICULE DE BREVET EUROPEEN**

(45) Date de publication du fascicule du brevet:
25.07.90

(51) Int. Cl.⁵: **B23K 9/00**, G02F 1/055, H04N 5/235

(21) Numéro de dépôt: 88401275.8

(22) Date de dépôt: 25.05.88

(54) Dispositif de surveillance télévisuelle d'une opération de soudage à l'arc.

(30) Priorité: 01.06.87 FR 8707633

(43) Date de publication de la demande:
07.12.88 Bulletin 88/49

(45) Mention de la délivrance du brevet:
25.07.90 Bulletin 90/30

(84) Etats contractants désignés:
BE CH DE ES GB LI SE

(56) Documents cités:
FR-A- 2 293 188
FR-A- 2 351 550
US-A- 4 652 916

PATENT ABSTRACTS OF JAPAN,
vol. 10, no. 249 (M-511)[2305], 27 août 1986; &
JP-A-61 78 571 (ISHIKAWAYIMA HARIMA HEAVY IND
CO., LTD) 22-04-1986
WELDING JOURNAL,
vol. 66, no. 3, mars 1987, pages 47-54, Miami, US; S.
Gordon et al.: "Development of a CCTV system for
welder training and monitoring of space shuttle main
engine welds"
JAPANESE JOURNAL OF APPLIED PHYSICS SUPPL.,
vol. 15, no. 7, 1976, pages 131-137; K. SUZUKI et al.:
"PLZT matrix display"

(73) Titulaire: FRAMATOME, Tour Fiat 1, Place de la Coupole,
F-92400 Courbevoie(FR)

(72) Inventeur: Gaudin, Jean-Paul, 3 Rue Jacques Brel,
F-69680 Chassieux(FR)

(74) Mandataire: Bouget, Lucien et al, Cabinet
Lavoix 2, Place d'Estienne d'Orves, F-75441 Paris
Cédex 09(FR)

ACTORUM AG

## Description

L'invention concerne un dispositif de surveillance télévisuelle d'une zone dans laquelle on réalise une opération de soudage à l'arc sur des pièces métalliques, par dépôt en continu d'un cordon de soudure.

On connaît des installations de soudage à l'arc qui sont conçues pour effectuer le soudage automatique ou semi-automatique de pièces métalliques, par dépôt en continu de cordons de soudure dans un chanfrein ménagé à la jonction des deux pièces.

Dans certains cas, l'opération de soudage doit être commandée et surveillée à distance, pour éviter la présence d'un opérateur dans la zone où se trouvent les pièces métalliques à joindre.

Il en est ainsi, en particulier, dans le cas du soudage de pièces de grandes dimensions du circuit primaire d'un réacteur nucléaire à eau sous pression.

On a par exemple envisagé récemment, dans le but d'accroître la durée de vie d'une centrale nucléaire, de remplacer, par des générateurs de vapeur neufs, les générateurs de vapeur usagés d'un réacteur nucléaire à eau sous pression dont le faisceau de tubes est devenu défectueux au cours d'une utilisation de longue durée.

Pour effectuer cette opération de remplacement d'un générateur de vapeur dans son ensemble, il est nécessaire en particulier d'effectuer la jonction par soudage des tubulures d'entrée et de sortie d'eau primaire du générateur de vapeur avec les conduites correspondantes du circuit primaire maintenues en attente dans le bâtiment du réacteur. Cette opération peut se faire par soudage semi-automatique, l'opération étant commandée depuis un poste de contrôle situé à une certaine distance de la zone de soudage. Un opérateur doit surveiller en permanence l'opération de soudage, grâce à une visualisation de la zone dans laquelle on réalise le cordon de soudure, sur un écran de télévision.

Il est nécessaire dans ce cas de fournir une image de la zone de soudage d'une grande netteté, puisque l'opérateur doit évaluer, au vu de l'image sur l'écran, les mesures à prendre éventuellement pour assurer le dépôt d'un cordon de soudure parfait. Il est en effet nécessaire d'obtenir un dépôt de métal de jonction ne présentant aucun défaut.

Les installations de soudage à l'arc utilisées pour le soudage de tuyauteries de grandes dimensions sont du type orbital et comportent un élément de support motorisé et monté mobile sur un rail circulaire fixé sur l'une des tuyauteries dont on effectue la jonction. Sur cet élément de support, est montée une tête de soudage TIG comportant une électrode permettant la refusion d'un fil d'apport amené en continu au niveau de l'arc qui s'établit entre l'électrode et la zone de jonction des pièces. La tête de soudage est montée oscillante dans la direction transversale par rapport au déplacement orbital de la machine de soudage. On réalise ainsi un balayage suivant la largeur du cordon de soudure.

L'observation télévisuelle de la zone de soudage est donc compliquée par le fait qu'il existe un point ou zone très brillant correspondant à l'arc se déplaçant suivant la largeur du cordon de soudure, au centre de la zone de soudage. Le cordon de soudure, sur lequel l'opérateur doit concentrer son attention risque d'être peu visible, à cause de la très forte intensité lumineuse de l'arc. Il est possible d'utiliser un filtre opaque mais les parties de la zone de soudage qui ne sont pas soumises directement à la lumière de l'arc sont alors peu visibles, même si l'on utilise des projecteurs pour éclairer la zone de soudage. Pour effectuer une surveillance efficace du soudage en cours, l'opérateur doit disposer d'une image suffisamment nette de l'ensemble du chanfrein, en particulier pour vérifier l'état du cordon qui vient d'être déposé et sa position par rapport aux autres cordons déposés antérieurement ainsi que pour surveiller l'état d'avancement du soudage.

On connaît des filtres à densité variable et réglables par zone grâce à des électrodes qui permettent d'éviter une surexposition ou un éblouissement par l'arc lors de la surveillance ou la prise de vue de la zone de soudage. Cependant de tels filtres à cristaux liquides sont peu adaptés à une utilisation dans une installation de soudure industrielle et ne permettent pas une différenciation précise des différentes zones à luminosité variable.

Le but de l'invention est donc de proposer un dispositif de surveillance télévisuelle d'une zone dans laquelle on réalise une opération de soudage à l'arc sur des pièces métalliques, par dépôt en continu d'un cordon de soudure, en utilisant une machine de soudage comportant un support mobile et une tête de soudage montée oscillante sur le support pour effectuer un balayage transversal pendant le dépôt du cordon du soudure, le dispositif de surveillance comportant au moins une caméra vidéo solidaire du support de la machine de soudage, la caméra vidéo comportant, interposé sur le trajet des rayons lumineux venant de la zone de soudage, en amont d'un dispositif de transformation de ces rayons en signal vidéo, un filtre constitué par une plaque et des électrodes disposées en contact avec l'une ou l'autre des deux faces de la plaque suivant un réseau déterminé, et le dispositif de surveillance comportant de plus, associé à la caméra, un ensemble électronique d'analyse du signal vidéo et de commande des potentiels des électrodes pour régler les champs électriques traversant la plaque dans le sens de son épaisseur, à des valeurs permettant d'obtenir une densité voulue du filtre dans différentes zones définies par le réseau des électrodes, ce dispositif de surveillance permettant de mettre à la disposition d'un opérateur une image vidéo extrêmement nette de toute la zone de soudage et présentant un filtre dont la structure est adaptée à une utilisation dans une installation de soudure.

Dans ce but, le dispositif est caractérisé en ce que la plaque est en matériau céramique possédant des propriétés rotatoires de la lumière et les électrodes sont constituées par des bandes conductrices rectilignes de très faible largeur, en contact avec chacune des faces de la plaque de matériau céramique, définissant des zones de la plaque disposées les unes à la suite des autres suivant des lignes et des colonnes pour constituer un réseau à mailles carrées.

Afin de bien faire comprendre l'invention, on va maintenant décrire, à titre d'exemple non limitatif, en se référant aux figures jointes en annexe, un mode de réalisation d'un dispositif de surveillance suivant l'invention.

La figure 1 est une vue de face en élévation d'une machine de soudage comportant un dispositif de surveillance suivant l'invention.

La figure 2 est une vue de dessus suivant II-II de la figure 1.

La figure 3 est une vue en coupe d'une des caméras vidéo du dispositif de surveillance.

La figure 4 est une vue en plan d'un filtre associé à la caméra vidéo représentée sur la figure 3.

La figure 5 est une vue en coupe et en élévation à plus grande échelle d'une partie de la caméra représentée sur la figure 3.

La figure 6 est une représentation schématique du signal vidéo de la caméra, suivant une ligne.

La figure 7 est une représentation schématique du dispositif d'analyse et de commande du filtre de la caméra.

La figure 8 est un schéma électronique simplifié du dispositif d'analyse et de commande du filtre.

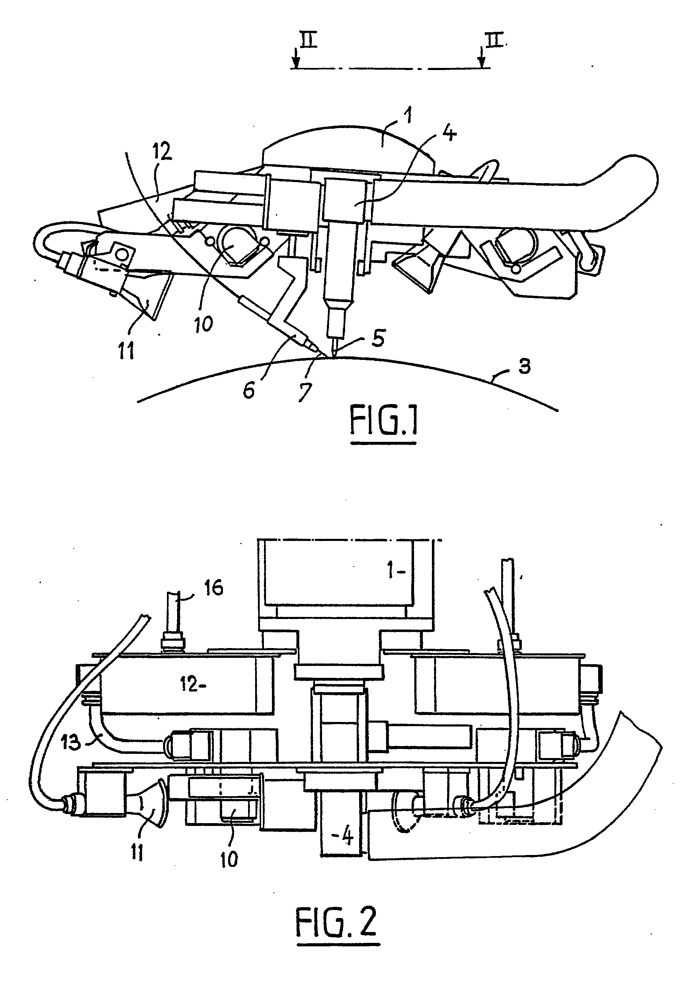

Sur les figures 1 et 2, on voit le support 1 de la machine de soudage qui est monté sur des rails non représentés pour se déplacer de manière orbitale, dans l'un ou l'autre sens de rotation, autour d'un chanfrein de soudage ménagé entre l'extrémité d'une canalisation primaire et l'extrémité d'une tubulure de raccordement d'un générateur de vapeur à cette canalisation primaire d'un réacteur nucléaire à eau sous pression. On a représenté sur la figure 1 uniquement la ligne 3 correspondant au fond du chanfrein sur lequel on vient déposer un cordon de soudure grâce à la tête de soudage 4 comportant une électrode 5. Un dispositif 6 permet d'amener en continu un fil de soudage 7 dans l'arc qui s'établit, entre l'électrode 5 et le fond 3 du chanfrein, lorsque l'électrode est alimentée en courant électrique.

Le dispositif de surveillance télévisuelle de la zone de soudage comporte deux ensembles identiques situés de part et d'autre de la tête de soudage 4 et fixés sur le support 1. Chacun des ensembles comporte une caméra vidéo 10, un projecteur 11, un boîtier électronique 12 et un ensemble de câbles d'alimentation ou de jonction des différents éléments du dispositif de surveillance. Le dispositif de surveillance permet donc d'obtenir simultanément deux images du chanfrein prises respectivement depuis l'avant de la machine de soudage et depuis l'arrière de cette machine, si l'on considère sa direction et son sens de déplacement.

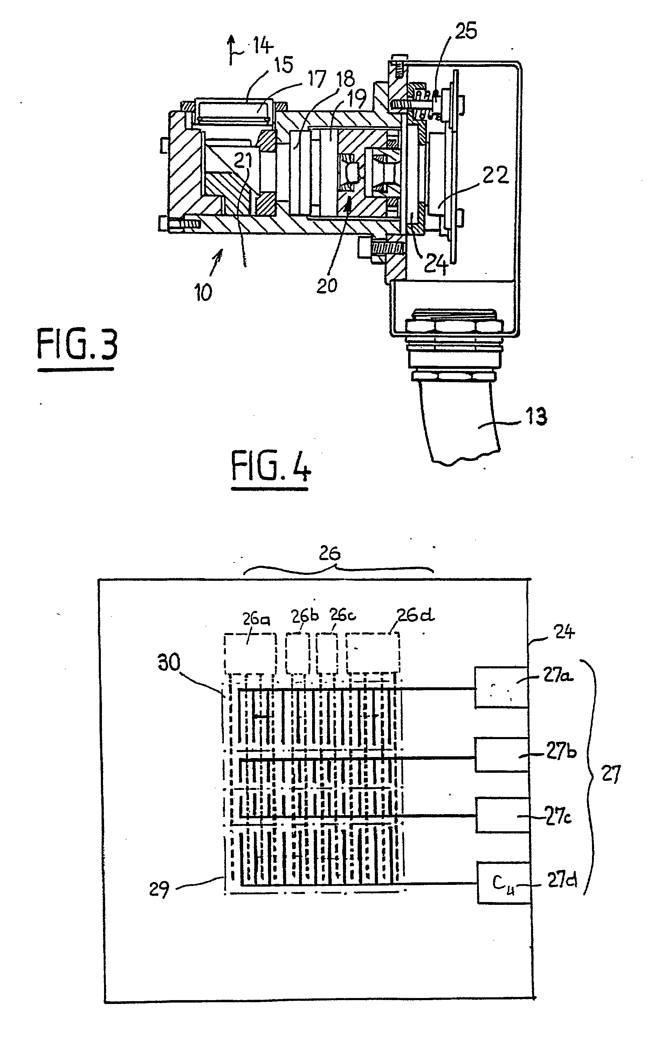

Sur la figure 3, on voit une caméra vidéo 10 qui comporte une fenêtre d'entrée 15 dirigée vers le fond du chanfrein 3 (direction de la flèche 14) lorsque la caméra est montée en position de service sur la machine de soudage. A son autre extrémité, la caméra comporte une sortie de câble vidéo 13 permettant de transmettre le signal vidéo au boîtier électronique 12 lui-même relié au poste de contrôle de l'installation de soudage par un câble vidéo 16. Entre la fenêtre d'entrée 15 et la sortie 13 du signal vidéo, la caméra comporte, de façon classique, un ensemble de filtres 17, 18, 19, un prisme de renvoi des rayons lumineux 21, un objectif 20 et un circuit électro-optique miniaturisé 22 réalisé sous la forme d'une puce électronique. Le signal vidéo obtenu en sortie du circuit 22 est envoyé par les câbles 13 et 16 au poste de contrôle pour la restitution de l'image sur écran de télévision.

Suivant l'invention, un filtre supplémentaire 24 est intercalé entre l'objectif 20 et le circuit fournissant le signal vidéo 22. Le filtre 24 est maintenu en place sur la caméra par un ensemble 25 comportant un étrier, des vis et des ressorts d'appui.

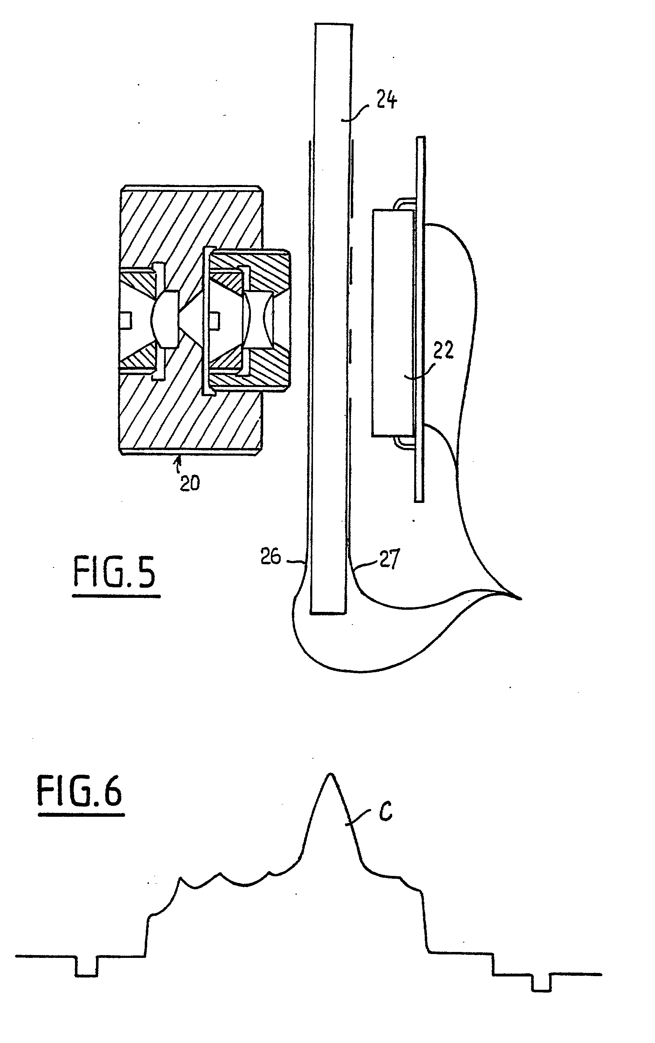

Sur les figures 4 et 5, on voit le filtre 24 qui est constitué par une plaque de matière céramique possédant des propriétés rotatoires de la lumière sensibles à l'action d'un champ électrique dans le matériau de la plaque céramique 24. La plaque 24 de forme carrée a un côté dont la longueur est 25,4 mm et une épaisseur de 0,3 mm.

Quatre électrodes rectilignes 26a, 26b, 26c et 26d sont mises en contact avec l'une des faces de la plaque de céramique 24 qui est dirigée vers l'objectif 20, dans la partie centrale de cette plaque.

Quatre autres électrodes 27a, 27b, 27c et 27d sont mises en contact avec l'autre face de la plaque de céramique 24 dirigée vers le circuit électronique 22, dans la partie centrale de cette plaque. Les électrodes 27a, 27b, 27c et 27d sont perpendiculaires aux électrodes 26a, 26b, 26c et 26d et comportent des embranchements parallèles à ces électrodes.

Les électrodes sont réalisées par dépôt d'une couche de chrome d'une épaisseur inférieure à 50 µm et d'une largeur de 60 µm sur les faces de la plaque 24. Les extrémités des électrodes destinées à être jointes au circuit de commande par des conducteurs sont recouvertes d'or.

Sur la figure 4, on a figuré en pointillés un carré 29 situé au centre de cette zone recouverte par les électrodes dont le côté mesure moins de 10 mm. Ce carré 29 correspond à la fenêtre d'entrée du circuit opto-électronique 22. Cette zone active du filtre qui est traversée par les rayons lumineux sortant de l'objectif et provenant de la zone de soudage, est divisée en seize zones 30 sensiblement carrées correspondant chacune au croisement de deux électrodes situées de part et d'autre de la plaque 24 constituant le filtre.

Lorsque les électrodes 26 et 27 sont alimentées à des potentiels différents, des champs électriques traversent la plaque 24 dans le sens de son épaisseur. Des champs électriques peuvent être réglés à des valeurs souhaitables, dans chacune des zones élémentaires 30, en réglant les potentiels des électrodes 26 et 27 correspondantes.

Le réglage de ces potentiels d'electrodes est effectué par l'ensemble électronique disposé à l'intérieur du boîtier 12 qui est relié à la caméra par un câble de liaison 13. La commande des électrodes résulte de l'analyse du signal vidéo en sortie du circuit 22 et permet un réglage des champs électriques de façon à augmenter la densité optique du filtre dans certaines zones, pour diminuer l'effet de brillance de l'arc. Les autres zones 30 de la partie active 29 du filtre 24 peuvent garder simultanément une faible den-sité et un faible pouvoir filtrant, les potentials des électrodes correspondantes étant choisis en conséquence.

La matière céramique présente en effet des propriétés rotatoires de la lumière qui dépendent du champ électrique auquel elle est soumise, si bien que la commande du potentiel des électrodes permet de régler la densité du filtre dans les différentes zones 30. Généralement, la densité du filtre sera réglée à une valeur plus forte au centre de la zone active 29 qu'à la périphérie, la partie centrale recevant les rayons provenant des zones soumises directement à la lumière de l'arc.

Le coffret électronique 12 renferme un ensemble d'analyse du signal vidéo provenant du circuit opto-électronique 22 et de commande des potentiels des électrodes 26 et 27 situées de part et d'autre de la plaque 24 de céramique constituant le filtre.

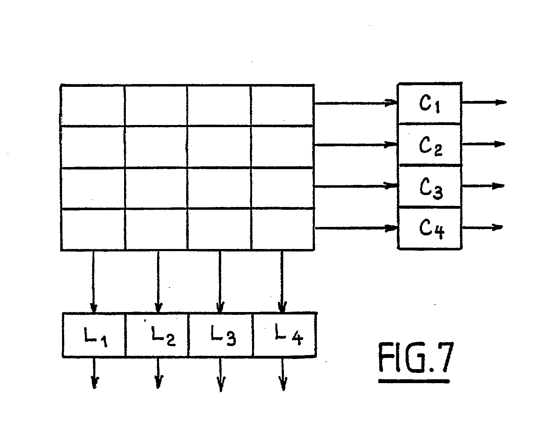

Sur la figure 6, on a représenté de façon schématique les variations de l'intensité du signal vidéo suivant une ligne quelconque d'une trame image. Cette ligne présente une crête C correspondant à un maximum de l'intensité lumineuse.

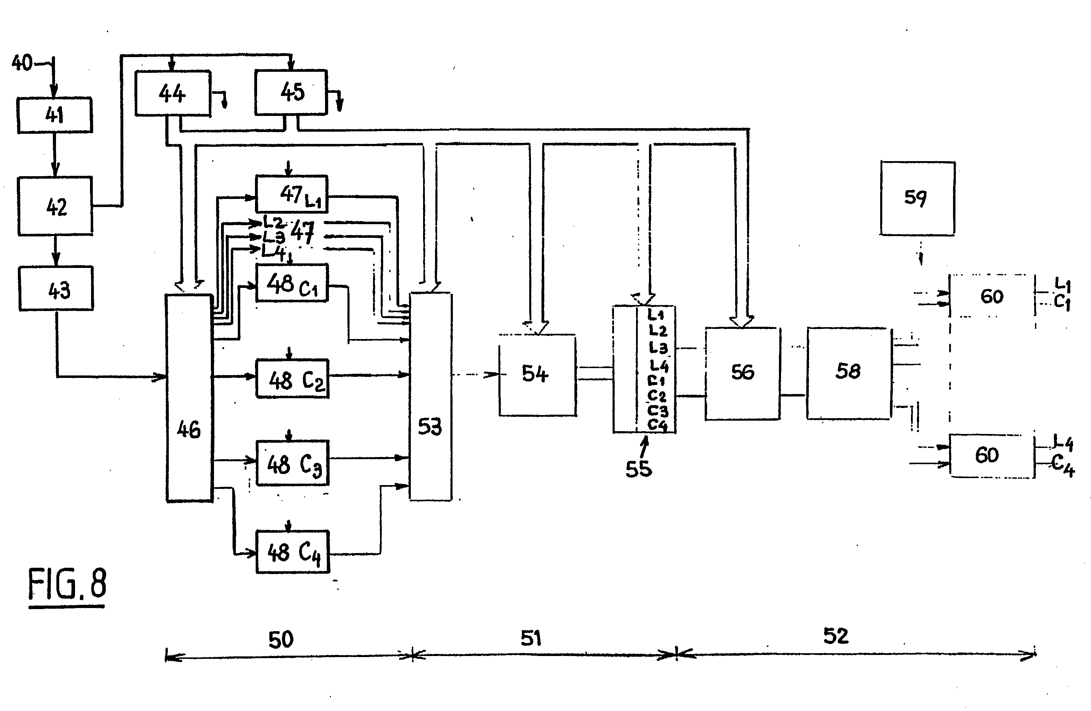

L'ensemble électronique représenté sur la figure 8 détecte les maximas C en analysant le signal vidéo, ligne par ligne pour une trame image complète. A la fin de cette analyse, les valeurs acquises sont appliquées, sous forme de potentiels élevés, au filtre 24, lors de l'analyse de la trame suivante.

Une trame image est décomposée en quatre bandes horizontales et quatre bandes verticales, comme il est visible sur la figure 7. Les bandes horizontales sont obtenues par une division de la trame suivant quatre ensembles $L_{i(1,4)}$ comportant soixante-dix huit lignes successives, et les bandes verticales par une division temporelle suivant quatre colonnes $C_{(1,4)}$ de 16 µs chacune. L'intersection des bandes horizontales et verticales donne seize zones actives au niveau du filtre 24, pour lesquelles il convient d'appliquer deux potentiels élevés, fonctions des valeurs $L_{i(1,4)}$ - $C_{(1,4)}$, par l'intermédiaire des électrodes 26 et 27.

Compte tenu du procédé de balayage vidéo, la détection des maximas s'obtient par un traitement logique rapide, avec multiplexage, détection de tête de multiplexage, conversion analogique numérique, mémorisation des maximas. Ces valeurs de maximas sont exploitées lors de la trame suivante.

Le traitement logique est réalisé de façon synchrone à partir du chronogramme du signal vidéo composite. Du signal vidéo composite 40 reçu dans une mémoire tampon 41 sont extraits les signaux de synchronisation ligne et trame. Ces signaux sont pris en compte par différents compteurs qui assurent la gestion de tous les circuits nécessaires au traitement.

Les signaux de synchronisation de lignes incrémentent un compteur totalisateur de tops synchros lignes, suivi d'un diviseur par 78 incrémentant un compteur ligne Li de 1 à 4. A chaque incrémentation, le compteur Li génère l'adressage du multiplexeur, démultiplexeur et des registres L1 - L2 - L3 - L4. La valeur contenue dans le détecteur de crête Li est transmise dans le registre correspondante L1 - L2 - L3 - L4, après conversion numérique et le détecteur de crête Li est remis à zéro, ainsi que le compteur totalisateur de tops synchros lignes. Le compteur ligne Li est remis à zéro par le signal de fin de trame et se retrouve donc en configuration départ pour la trame suivante.

Au niveau des colonnes, les tops synchros lignes valident, pour chaque ligne, quatre monostables de périodes 16 µs montés en cascade incrémentant un compteur de colonne C de 1 à 4, dont la remise à zéro est réalisée à chaque fin de ligne.

Pour une incrémentation, le compteur de colonne $C_{(1,4)}$ génère les différents adressages nécessaires aux divers circuits de traitement. Les détecteurs de crête $C_{(1,4)}$ sont validés cycliquement une fois par ligne pendant 16 µs à raison de x lignes par tramme par le compteur de colonnes C. En fin de trame, les quatre valeurs de maximas présentes au niveau des détecteurs de crête $C_{(1,4)}$ sont transmises séquentiellement dans les quatre registres $C_1$, $C_2$, $C_3$, $C_4$ après conversion numérique.

Au terme de cette phase de traitement, les quatre valeurs de maximas des lignes et des colonnes se trouvent disponibles sous forme numériques, dans les huit registres.

A la trame suivante, ce traitement logique est reconduit suivant le même principe. Pendant ce traitement les compteurs lignes et colonnes assurent la gestion de la mémoire de linéarisation qui acquiert les valeurs présentes dans les registres au fur et à mesure que ces dernières sont renouvelées. La linéarisation est effectuée pour obtenir une réponse linéaire du filtre aux valeurs des maximas.

La linéarisation réalisée, les valeurs de maximas sont reconverties en valeurs analogiques avant d'être appliquées à des alimentations doubles à commande variable, dans le but d'être amplifiées pour obtenir les potentiels de commande d'électrodes nécessaires au fonctionnement de la céramique.

Sur la figure 8, on a représenté de façon schématique les éléments de l'ensemble électronique permettant d'effectuer le traitement décrit ci-dessus.

Les éléments constituant le premier étage 50 de l'ensemble comprennent une mémoire tampon 41, un extracteur de signaux de synchronisation 42, un amplificateur vidéo 43, un compteur lignes 44, un compteur colonnes 45, un multiplexeur 46, un ensemble de détecteurs de crêtes 47 sur les lignes $L_1$ à $L_4$ et un ensemble de détecteurs de crêtes 48 dans les colonnes $C_1$ à $C_4$.

Le deuxième étage 51 de l'ensemble électronique comporte un démultiplexeur 53, un convertisseur analogique-numérique 54 et un ensemble de registres lignes et colonnes 55.

Enfin, le troisième étage 52 de l'ensemble électronique comporte une mémoire de linéarisation 56, un convertisseur analogique numérique 58 et les alimentations 59 et 60 des électrodes 26 et 27.

La densité optique des différentes parties du filtre est donc, à chaque instant, fonction des champs électriques traversant la céramique et donc de l'analyse de l'image vidéo. Il en résulte une adaptation continue et pratiquement instantanée du filtre aux conditions de luminosité dans la zone de soudage.

Les potentiels des électrodes situées de part et d'autre du filtre sont de signes opposés et leur amplitude dépend de l'amplitude des maxima relevés sur le signal vidéo, par ligne et par colonne, suivant un découpage correspondant au découpage des électrodes du filtre, comme représenté sur la figure 7.

Le dispositif suivant l'invention permet donc d'obtenir en continu une image nette de la zone de soudage quelles que soient la position et l'intensité de l'arc.

Les conditions dans lesquelles la surveillance de l'opération de soudage à distance peut être effectuée sont donc améliorées et l'opérateur dispose ainsi de moyens accrus pour surveiller et commander l'opération de soudage.

C'est ainsi qu'on peut imaginer l'utilisation d'un plus grand nombre d'électrodes verticales et horizontales situées de part et d'autre du filtre.

Cependant, il faut remarquer que la zone d'action de chacune des électrodes s'étend à l'intérieur de la matière céramique, au-delà des limites de zones de forme carrée strictement définies par les électrodes. Il en résulte des interactions nombreuses et l'existence de nombreuses zones de formes complexes dans lesquelles le filtre présente des densités variables. La précision de l'action du filtre est donc très bonne, sans qu'on utilise un grand nombre d'électrodes et donc sans qu'un dispositif de commande très complexe soit nécessaire.

L'ensemble électronique d'analyse du signal vidéo et de commande des électrodes peut avoir une forme et une structure différentes de celles qui ont été décrites.

**Revendications**

1.- Dispositif de surveillance télévisuelle d'une zone dans laquelle on réalise une opération de soudage à l'arc sur des pièces métalliques, par dépôt en continu d'un cordon de soudure, en utilisant une machine de soudage comportant un support mobile (1) et une tête de soudage (4) montée oscillante sur le support (1) pour effectuer un balayage transversal pendant le dépôt du cordon de soudure, le dispositif de surveillance comportant au moins une caméra vidéo (10) solidaire du support (1) de la machine de soudage, la caméra vidéo (10) comportant, interposé sur le trajet des rayons lumineux venant de la zone de soudage, en amont d'un dispositif (22) de transformation de ces rayons en signal vidéo, un filtre constitué par une plaque (24) et des électrodes (26, 27) disposées en contact avec l'une ou l'autre des deux faces de la plaque (24) suivant un réseau déterminé, et le dispositif de surveillance comportant de plus, associé à la caméra, un ensemble électronique (12) d'analyse du signal vidéo et de commande des potentiels des électrodes (26, 27), pour régler les champs électriques traversant la plaque (24) dans le sens de son épaisseur, à des valeurs permettant d'obtenir une densité voulue du filtre dans différentes zones définies par le réseau des électrodes (26, 27), caractérisé par le fait que la plaque (24) est en matériau céramique possédant des propriétés rotatoires de la lumière et que les électrodes (26, 27) sont constituées par des bandes conductrices rectilignes de très faible largeur, en contact avec chacune des faces de la plaque de matériau céramique (24), définissant des zones (30) de la plaque (24) disposées les unes à la suite des autres suivant des lignes ($L_1$, $L_2$, $L_3$, $L_4$) et des colonnes ($C_1$, $C_2$, $C_3$, $C_4$) pour constituer un réseau à mailles carrées.

2.- Dispositif de surveillance suivant la revendication 1, caractérisé par le fait que l'ensemble électronique (12) comporte des moyens (47) pour déterminer le maximum du signal vidéo sur chacune des lignes successives, des moyens (48) pour déterminer le maximum du signal vidéo sur chacune des colonnes successives et des moyens de traitement (54, 55, 56, 58) des maxima détectés au cours de l'analyse du signal vidéo, pour fournir une tension de commande à chacune des électrodes (26, 27) qui sont placées suivant une direction horizontale ou verticale.

3.- Dispositif de surveillance suivant la revendication 1, caractérisé par le fait que le filtre (24) est intercalé entre un objectif (20) et un circuit opto-électronique (22) de traitement du signal optique situés à la sortie de la caméra vidéo (10).

**Patentansprüche**

1. Vorrichtung zur Fernseh-Überwachung einer Zone, in der durch kontinuierliche Abscheidung einer Schweißraupe ein Lichtbogen-Schweißvorgang an metallischen Bauteilen unter Verwendung einer Schweißmaschine abläuft, die einen beweglichen Support (1) und einen Schweißkopf (4) aufweist, der an dem Support (1) schwingungsfähig angebracht ist, um während der Abscheidung der Schweißraupe eine transversale Pendelbewegung durchzuführen, wobei die Überwachungsvorrichtung wenigstens eine fest mit dem Support (1) der Schweißmaschine verbundene Videokamera (1) aufweist, die ein in den Weg der aus der Schweißzone kommenden Lichtstrahlen vor einer Einrichtung (22) zum Umsetzen dieser Strahlen in ein Videosignal eingefügtes, aus einer Scheibe (24) und aus in Berührung mit der einen oder der anderen der beiden Seiten der Scheibe (24) nach einem bestimmten Netzmuster angeordneten Elektroden (26, 27) bestehendes Filter aufweist, und wobei die Überwachungsvorrichtung außerdem, in Verbindung mit der Kamera, eine elektronische Schaltung (12) zum Analysieren des Videosignals und zum Steuern der Potentiale der Elektroden (26, 27) aufweist, um die die Scheibe (24) in Richtung ihrer Dicke durchsetzenden elektrischen Felder auf Werte einzustellen, die es gestatten, in den verschiedenen durch das Netzmuster der Elektroden (26, 27) definierten Zonen eine gewünschte Filterdichte zu erzielen, dadurch gekennzeichnet, daß die Scheibe (24) aus einem keramischen Material besteht, das lichtdrehende Eigenschaften besitzt, und daß die Elektroden (26, 27) durch geradlinige leitende Bänder von sehr geringer Breite gebildet sind, die mit jeder der Oberflächen der Scheibe (24) aus keramischem Material in Berührung stehen und Zonen (30) der Scheibe (24) definieren, die gemäß Zeilen ($L_1$, $L_2$, $L_3$, $L_4$) und Spalten ($C_1$, $C_2$, $C_3$,

5

C₄) nebeneinander angeordnet sind, um ein Netzmuster mit rechteckigen Maschen zu bilden.

2. Überwachungsvorrichtung nach Anspruch 1, dadurch gekennzeichnet, daß die elektronische Schaltung (12) Mittel (47) zum Bestimmen des Maximums des Videosignals in jeder der aufeinanderfolgenden Zeilen, Mittel (48) zum Bestimmen des Maximums des Videosignals in jeder der aufeinanderfolgenden Spalten und Mittel (54, 55, 56, 58) zum Verarbeiten der während der Analyse des Videosignals erfaßten Maxima aufweist, um eine Steuerspannung für jede der Elektroden (26, 27) zu liefern, die entlang einer horizontalen oder vertikalen Richtung angeordnet sind.

3. Überwachungsvorrichtung nach Anspruch 1, dadurch gekennzeichnet daß das Filter (24) zwischen ein Objektiv (20) und eine optoelektronische Schaltung (22) zum Verarbeiten des optischen Signals eingefügt ist, die am Ausgang der Videokamera (10) liegt.

## Claims

1. Apparatus for television monitoring of a zone in which an arc welding operation is carried out on metal parts by the continuous deposition of a weld bead, using a welding machine incorporating a movable support (1) and a welding head (4) oscillatably mounted on the support (1) in order to make a transverse sweep during the deposition of the weld bead, the monitoring apparatus incorporating at least one video camera (10) secured to the support (1) of the welding machine, the video camera (10) incorporating a filter interposed in the path of the light rays coming from the welding zone and upstream of a device (22) for converting these light rays into video signals, said filter consisting of a plate (24) and electrodes (26, 27) disposed in contact with one or other of the two sides of the plate (24) in accordance with a predetermined network, the monitoring apparatus further incorporating, associated with the camera, an electronic unit (12) for analysing the video signal and controlling the potentials of the electrodes (26, 27), in order to regulate the electric fields passing through the plate (24) in the direction of its thickness to levels which make it possible to obtain the desired density of the filter in different zones defined by the network of electrodes (26, 27), characterised in that the plate (24) is made of a ceramic material having light rotating properties and in that the electrodes (26, 27) are made up of very narrow rectilinear conductive bands in contact with each of the sides of the plate (24) of ceramic material, defining zones (30) on the plate (24) which are disposed one after another in lines ($L_1$, $L_2$, $L_3$, $L_4$) and columns ($C_1$, $C_2$, $C_3$, $C_4$), so as to form a square-meshed network.

2. Monitoring apparatus according to claim 1, characterised in that the electronic unit (12) incorporates means (47) for determining the maximum of the video signal on each of the successive lines, means (48) for determining the maximum of the video signal on each of the successive columns and means (54, 55, 56, 58) for processing the maxima detected in the course of the analysis of the video signal in order to supply a control voltage to each of the electrodes (26, 27) which are placed in a horizontal or vertical direction.

3. Monitoring apparatus according to claim 1, characterised in that the filter (24) is interposed between an objective (20) and an opto-electronic circuit (22) for processing the optical signal, said objective (20) and circuit (22) being situated at the exit from the video camera (10).

FIG.1

FIG.2

FIG.3

FIG.4

FIG.5

FIG.6

FIG.7

FIG. 8